(19) Europäisches Patentamt
European Patent Office
Office européen des brevets

(11) **EP 3 950 801 A1**

(12) **EUROPEAN PATENT APPLICATION**
published in accordance with Art. 153(4) EPC

(43) Date of publication:
**09.02.2022 Bulletin 2022/06**

(21) Application number: **20778794.6**

(22) Date of filing: **13.03.2020**

(51) Int Cl.:
*C08K 3/04* (2006.01)

(86) International application number:
**PCT/ES2020/070177**

(87) International publication number:
**WO 2020/193827 (01.10.2020 Gazette 2020/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.03.2019 ES 201930277**

(71) Applicants:
• **Consejo Superior de Investigaciones Cientificas
28006 Madrid (ES)**

• **Universidad De León
24009 León (ES)**

(72) Inventors:
• **GONZÁLEZ DOMÍNGUEZ, José Miguel
50018 Zaragoza (ES)**
• **FERNÁNDEZ RAGA, María
24009 León (ES)**

(74) Representative: **Pons
Glorieta Rubén Darío 4
28010 Madrid (ES)**

(54) **METHOD FOR PROTECTING AN ORNAMENTAL OBJECT OR SURFACE OF ROCKY ORIGIN, EXPOSED TO THE ELEMENTS**

(57)   Method for protecting an ornamental object or surface of rocky origin, exposed to the elements. The invention relates to a method for protecting an ornamental object or surface of rocky origin, exposed to the elements; in particular to a method for protecting historical and cultural heritage sites. It therefore belongs to the field of materials science, and more specifically to the field of coatings for protection against wear and erosion of objects or surfaces of rocky origin.

**Description**

The invention relates to a method for protecting an ornamental object or surface of rocky origin, exposed to the elements, in particular to a method for protecting historical and cultural heritage sites. It therefore belongs to the field of materials science, and more specifically to the field of coatings for protection against wear and erosion of objects or surfaces of rocky origin.

**BACKGROUND OF THE INVENTION**

The vast majority of archaeological monuments that constitute historical and cultural heritage are exposed to the elements, therefore being subjected to different environmental conditions which can cause water erosion in their structures. Combating this wear and deterioration entails constant economic investments by those responsible for their conservation by frequently applying treatments, since there is currently no product that offers longer-term protection and also does not alter the aesthetics and functionality of said heritage.

This deterioration is more evident in carbonate rocks, which are frequently used in monuments but are highly vulnerable to erosion. Over the last few years, a wide variety of materials have been tested to protect limestone and dolomites, but all have had unsatisfactory results [Moropoulou A, Kouloumbi N, Haralampopoulos G, Konstanti A, Michailidis P (2003) Criteria and methodology for the evaluation of conservation interventions on treated porous stone susceptible to salt decay. Prog. Org. Coat. 48, 259-270]. Recently, coatings with different organic synthetic products such as acrylic or fluorinated polymers have been used; however, these coatings have been disregarded because they cause the rock to change colour [La Russa MF, Barone G, Belfiore GM, Mazzoleni P, Pezzino A (2011) Application of protective products to 'Noto' calcarenite (south-eastern Sicily): a case study for the conservation of stone materials. Environ. Earth Sci. 62, 1263-1272.] or they have not achieved the necessary effectiveness [Alessandrini G, Aglietto M, Castelvetro V, Ciardelli F, Peruzzi R, Toniolo L (2000) Comparative evaluation of fluorinated and unfluorinated acrylic copolymers as waterrepellent coating materials for stone. J. Appl. Polym. Sci. 76, 962-977.]. Other protection treatments that have been used are desalinators, which use paper pulp or absorbent clays impregnated in deionised water to clean highly damaging salts from the surface of facades [Alemany E, Aranguren L (2003) Criterios de Intervención en Materiales Pétreos (Intervention Criteria in Masonry Materials). ) Bienes Cult. Inst. Patrim. Histórico Esp. 2, 20.], but this alternative has not definitively solved the problem. Sometimes, barium chloride or other similar compounds have been used to transform soluble salts into insoluble ones, but these methods are discouraged because they facilitate the formation of secondary products [La Russa MF, Barone G, Belfiore GM, Mazzoleni P, Pezzino A (2011) Application of protective products to 'Noto' calcarenite (south-eastern Sicily): a case study for the conservation of stone materials. Environ. Earth Sci. 62, 1263-1272.].

Currently, a great majority of restoration works on ornamental limestone rocks is carried out by applying a series of treatments that include a first cleaning treatment with chemical products, microabrasion or laser ablation, subsequent application of water repellent and, lastly, application of a consolidating product. These treatments, the application of which entails high costs, have a period of protection of only five years and do not provide homogeneous coverage over the rock. In addition, they lead to wear of the ornamental rock since the application thereof entails some material removal and surface abrasion of the stone and, in some cases, colour variation.

Graphene derivatives, such as graphene oxide, have recently drawn attention in the field of protective coatings due to their involvement in inhibiting the corrosion of metals [Nine M. J., Cole M. A., Tran D. N. H., Losic D. Graphene: a multipurpose material for protective coatings. J. Mater. Chem. A, 3, 12580-12602 (2015)], reaching inhibitions of between 94% and 97% in metals such as copper, with different coatings derived from graphene. Moreover, graphene has been shown to have a much greater effect than traditional polymers (used for the same purpose) as a protector against metal corrosion induced by microorganisms [Krishnamurthy A., Gadhamshetty V., Mukherjee R., Natarajan B., Eksik O., Shojaee S. A., Lucca D. A., Ren W., Cheng H. M., Koratkar N. Superiority of Graphene over Polymer Coatings for Prevention of Microbially Induced Corrosion. Sci. Rep., 5, 1358 (2015).].

However, the graphene that most scientific studies refer to is synthesised by vapour deposition, which is an expensive and delicate method and which also requires cumbersome instrumentation, not feasible for outdoor application or as part of a largescale coating product/system (CN106317976A). In any case, in these works, it must only be applied to metals, not stone material.

Furthermore, graphene oxide, a much more affordable material and one that can be easily worked with on a larger scale, has been incorporated into commercial paints containing acrylic polymers as an additive that enhances the protective effect thereof. (CN106866074A). However, said paints would alter the aesthetics and functionality of the ornamental assets of historical and cultural heritage sites that are exposed to the elements and subjected to inclement weather. The use of polymers notably affects the transparency and non-gloss characteristics of the surfaces to which they are applied. For example, the composite material formed by graphene oxide and polydimethylsiloxane (PDMS) provides anticorrosive properties and improves mechanical properties, thermal conductivity, and resistance to erosion on the surfaces to which it is applied [Tang J, Yao W, Li W, Xu J, Jin L, JZhang J, Xu Z (2018) Study on a novel composite coating based on PDMS doped with modified graphene oxide. J. Coat. Technol. Res. 15, 375-383], but it entails a great physical change in colouring, gloss and feel of the surface to which it is applied.

Therefore, it is necessary to develop new methods for protecting historical and cultural heritage sites, exposed to the elements.

## DESCRIPTION OF THE INVENTION

The present invention relates to a method for protecting an ornamental object or surface of rocky origin, exposed to the elements. The object of the present invention is to protect by forming a protective coating made of graphene oxide, specifically a graphene oxide colloidal dispersion which does not comprise any other compound, spraying it on said object or surface.

Applying a graphene oxide-based colloidal dispersion exclusively on the ornamental object or surface, for example on the ornamental rock or stone of a historical and cultural heritage site, provides the assembly with:

- protection against erosion; less surface wear after adverse environmental conditions
- waterproofing properties such that the resistance of the ornamental rock of interest against dissolution processes is increased
- biocidal activity which prevents the colonisation of living things under all kinds of environmental conditions such as temperature changes, physical changes and changes in humidity
- integrity of the historical and cultural heritage site; the colloidal dispersion obtained in step (e) maintains the aesthetic and functional integrity of ornamental assets of historical and cultural heritage sites.
- greater mechanical resistance of the protected rocks, determined by compression tests using a hydraulic press.
- negligible colour change (not detectable with a commercial paint colourimeter called "procolor finder mini") up to a surface covered by the product that is equal to 0.013 mg/cm$^2$, and barely noticeable under slightly greater conditions, there being, however, significant differences in the increase of rock resistance starting with coverage of at least 0.0066 mg/cm$^2$.

Therefore, in a first aspect, the present invention relates to a method for protecting an ornamental object or surface of rocky origin, exposed to the elements (hereinafter "the method of the present invention"), characterised in that it comprises the following steps:

a) synthesising graphene oxide chemically in an acid medium,
b) dispersing the graphene oxide paste obtained in step (a) in water,
c) neutralising the graphene oxide dispersion obtained in step (b) to a pH of between 4.5 and 5.5 by dialysis in water,
d) eliminating the water contained in the graphene oxide obtained in step (c),
e) preparing a graphene oxide colloidal dispersion in a concentration of 0.1 to 1 mg/ml from the graphene oxide obtained in step (d) and water, preferably deionised, and
f) spraying the dispersion obtained in step (e) exclusively on an ornamental object or surface of rocky origin, keeping the percentage of darkening at values less than 1.

In the present invention, "of rocky origin" is understood as the object or surface of sedimentary origin such as limestone rock, dolomite, flint and/or gypsum.

In a preferred embodiment of the method of the present invention, the object or surface of rocky origin exposed to the elements is of interest for historical and cultural heritage. In the present invention, object or surface of rocky origin of interest for historical and cultural heritage is understood as an ornamental asset of past, present or future interest for historical and cultural heritage, of rocky origin which is found exposed to the elements, such as a restored rock or stone surface, ornamental stone quarries, façades, sculptures and reliefs. In the present invention, an ornamental asset of historical and cultural heritage is also understood to be the urban furniture of past, present and future interest of rocky origin and exposed to the elements, such as a fountain, a bench to sit on, etc.

In the first step of the method, graphene oxide is synthesised chemically in an acid medium, preferably it is synthesised by the Hummers-Offeman method; commonly known as the Hummers method (Hummers, W. S., Offeman, R. E. Preparation of graphitic oxide. J. Am. Chem. Soc., 80, 1339 (1958), 13). This method was described in the 1950s as a chemical way to achieve full oxidation of graphite in a more affordable and safe way than what was known to date. It is essentially based on putting graphite in contact with sulphuric acid and potassium permanganate at controlled times and temperatures. There are countless modifications of the Hummers method, in which the inclusion or exclusion of reagents, different proportions thereof, different times, temperatures, etc. have been tested in order to improve performance and give different chemical natures to the synthesised nanomaterials. Preferably, the method used is that of the following reference Tour et al. from 2010 (Marcano, D. C., Kosynkin, D. V., Berlin, J. M., Sinitskii, A., Sun, Z., Slesarev, A., Alemany, L. B., Lu, W., Tour, J. M. Improved Synthesis of Graphene Oxide. ACS Nano, 4, 4806-4814 (2010)). According to these authors, the addition of a small part of a polyprotic acid such as phosphoric acid (for example 10% phosphoric acid) protects the diols formed by permanganate and induces oxidation in consecutive carbons known as the "epoxide line", making the oxidation of graphite more defined and controllable. In any case, it is essential to work in a very acidic environment, generally sulphuric acid; in addition, additional acids such as nitric acid are incorporated in most methods. It should be noted that one of the common steps of the method, in addition, consists of washing with hydrochloric acid. To that end, the resulting graphene oxide is always extremely acidic in nature, due to the traces of all the acids used and the presence of numerous highly oxidised carbon fragments adsorbed in the surface of the synthesised material ("oxidised carbon debris").

For this reason, applying any graphene derivative obtained by means of the Hummers method on material of rocky origin can be highly counterproductive, since calcium and magnesium carbonates are highly reactive to acids and are soluble therein.

Therefore, to avoid destroying the ornamental object or surface of interest, of rocky origin, the method of the present invention comprises steps (b) and (c) to remove as much acid as possible. Step (b) aims to disperse the graphene oxide paste obtained in step (a) in water, preferably deionised water; and step (c) aims to neutralise the graphene oxide dispersion obtained in step (b) up to pH≈5 by dialysis in water, preferably ultrapure water.

Neutralisation is traditionally carried out by adding alkalis, but said alkalis can remain indefinitely in graphene oxide and, likewise, be detrimental in subsequent applications on the ornamental rock of carbonate origin of interest.

Possible processes to neutralise the graphene oxide obtained by the Hummers method are dispersion-filtering and dispersion-centrifugation processes in water, but they are very laborious processes that involve the use of long periods of suction and ultrasound which can damage and/or compact the material. In this sense, dialysis in water provides an advantage; it would be a simpler and less harmful process to meet the objective of neutralising the graphene oxide obtained in step (b).

One factor to take into account in the dialysis of step (c) of the method of the present invention is the choice of the membranes. Due to the extremely acidic conditions that newly synthesised graphene oxide exhibits, the membrane material must have a viable chemical composition under said conditions, as well as a pore size large enough to allow water to freely pass, but at the same time small enough to prevent the graphene oxide inside the membrane from leaving. The dialysis membranes used in the dialysis of step (c) are preferably of a molecular weight cut-off between 6 kDa and 8 kDa; even more preferably they are made of regenerated cellulose. This specific type of membrane meets the required requirements, and furthermore, the cellulose-based composition thereof is ideal for dialysis in water due to its high hydrophilicity. Likewise, cellulose is a renewable, biodegradable material, thus it also has secondary advantages in process sustainability and affordability.

The method of the present invention continues with step (d) eliminating the water contained in the graphene oxide obtained in step (c). Said step can be carried out with any technique known by the person skilled in the art. Preferably step (d) is carried out by slow evaporation or by lyophilisation.

Step (e) of the method of the present invention relates to the preparation of a graphene oxide colloidal dispersion in a concentration of 0.1 to 1 mg/ml from the graphene oxide obtained in step (d) and water, preferably deionised water.

The last step of the method, step (f), relates to spraying the dispersion obtained in step (e) exclusively, in other words, without comprising any additional compound, on the ornamental rock of interest, keeping the percentage of darkening at values between 0 and 0.7. In other words, we have determined an index to determine darkening by means of detecting the absorbance of the treated sample in comparison with the untreated sample. We have determined the absorbance by means of a Diffuse Reflectance Device to be coupled to a UV-Vis spectrophotometer, with a Barium Sulphate standard. The absorbance of the clear limestone samples was determined by extracting the wavelengths of the visible spectrum that are most similar to the colour of the sample (between yellow and orange) from the spectrum, such that what remains is a spectrum of between 570 nm and 690 nm. Therefore, we define the "percentage of relative darkening or darkening rate" as the value obtained from the following equation:

$$Darkening\ rate = \frac{Absorb\ sample\ without\ GO - Absorbance\ sample\ coated\ with\ n\ layers\ of\ GO}{Absorbance\ sample\ without\ GO}$$

Spraying can partially or completely cover the ornamental asset of interest.

Here it should be noted that a darkening of 1 would mean twice the hue of the sample, which in this case means a barely perceptible darkening since the samples are white, and which, however, has not even been reached in samples with 4 layers. When the ornamental object or surface is to be completely covered with the graphene oxide colloidal dispersion obtained in step (e), the percentage of darkening must be less than 1 for the colour change to be negligible, in other words, the colour change is not detectable with a commercial colourimeter such as a procolor mini finder commonly used by painters.

When the ornamental object or surface is to be partially covered, the darkening rate allowed will depend on the ornamental asset as a whole, since the aim is to avoid visually seeing a difference in gloss, colour or hue of the treated rock versus those that are not treated. Applying 2 or 3 coats does not cause darkening, whereas applying a greater number of layers could lead to a change. Therefore, it is also important to note that since natural stone is used, which has different shades, darker samples will allow the dose of graphene oxide layers to be increased more than those that are lighter.

Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples and figures are provided by way of illustration and are not intended to limit the present invention.

**BRIEF DESCRIPTION OF THE FIGURES**

**FIG. 1** shows electron microscopy images of synthesised graphene oxide. Image (a) corresponds to a scanning electron microscopy image (scale bar = 10 $\mu$m), whereas images (b) and (c) correspond to transmission electron microscopy (scale bars = 1 $\mu$m (b), 0.2 $\mu$m (c)).

**FIG. 2** shows chemical characterisation of the synthesised graphene oxide. (a) Thermal degradation profile (b) Infrared spectrum.

**FIG. 3** shows a photogrammetric analysis of the sample protected with graphene oxide AG10. (a) Before exposure, (b) After exposure and (c) Actual changes

**FIG. 4** shows a photogrammetric analysis of the sample not protected with graphene oxide A10. (a) Before exposure, (b) After exposure and (c) Actual changes.

**FIG. 5** shows the results of mechanical resistance in Mpa in the hydraulic press of the samples with graphene oxide (AG, RG and NG) and the unprotected samples (A, R and N).

**FIG. 6** shows a photograph taken with a magnifying glass of 10x magnification of the MA3 sample before and after being subjected to a test with rain and temperature changes. (a) Before (b) After

**FIG. 7** shows photographs taken with a magnifying glass of 10x magnification of the MN1 sample before and after being subjected to a test with rain and temperature changes. (a) Before (b) After

**FIG. 8** shows a photograph taken with a magnifying glass of 5x magnification of the MAG2 sample before and after being subjected to a test with rain. (a) Before (b) After

**FIG. 9** shows a photograph taken with a magnifying glass of 5x magnification of the MNG1 sample before and after being subjected to a test with rain and temperature changes. (a) Before (b) After

**FIG. 10** shows XPS spectra of the C1s orbitals in three representative samples.

**FIG. 11** shows a range of shades covered by the samples. RAL Classic code measured with a Nix Mini "procolor finder mini" colourimeter, manufactured by Nix Sensor Ltd. series no. D5085200.

**FIG. 12** shows average spectra of UV-Vis diffuse reflectance included in a specific range of wavelengths for the uncoated samples and samples coated with 1, 2, 3 and 4 layers of graphene oxide. Likewise, $BaSO_4$ is included as a reference (negative control).

**EXAMPLE**

The invention is illustrated below by means of tests conducted by the inventors that demonstrate the effectiveness of the product of the invention.

**Example 1.**

**Synthesis of Graphene oxide.**

The synthesis of graphene oxide following the Hummers method modified with phosphoric acid according to Tour, J. M. Improved Synthesis of Graphene Oxide. ACS Nano, 4, 4806-4814 (2010)] followed by a step of dialysis in water.

3 g of graphite flakes were put in contact with 400 ml of a mixture of sulphuric acid and phosphoric acid in a volumetric ratio of 9:1, in a round bottom glass flask with constant stirring and external cooling with an ice bath. Next, 18 g of potassium permanganate were slowly added. Once all the potassium permanganate was added, following with continuous stirring, it was heated to 50°C and allowed to react overnight (approximately 16 h). Subsequently, the reaction mixture was poured onto a metal mesh to sieve and remove the coarser solid particles, helping the process with a vacuum pump. The sieved mixture is poured over ~ 400 g of ice (made with clean deionised water) and 3 ml of 50% hydrogen peroxide were added to the whole. Once the ice melted, the entire resulting volume was subjected to centrifugation (4000 rcf) for 1 hour, the supernatant liquid being discarded. Subsequently, the resulting paste was dissolved in 200-300 ml of commercial concentrated hydrochloric acid and centrifuged, again discarding the supernatant liquids. Lastly, the same process was repeated once more, but this time dispersing the resulting paste in 96% commercial ethanol.

Next, the paste resulting from the last centrifugation in ethanol was dispersed in deionised water (an amount between 500 ml and 1000 ml) and the entire volume of solution was inserted into dialysis membranes, made from regenerated cellulose (SpectraPor®, molecular weight cut-off of 6-8 kDa). In turn, the membranes were inserted into a container large enough to be immersed in at least 5-10 times their volume of ultrapure water, under constant stirring. The water was changed every 2 hours until acidic pH was no longer observed in the dialysis waters, measured by indicator paper, and the graphene oxide dispersion within the dialysis membrane exhibits a pH of around 5, in a range comprised between 4.5 and 5.5. To recover solid graphene oxide from the water in which it has been dissolved in dialysis, said water was evaporated by gentle heating at 40°C. Optionally, it can also be lyophilised (freezing and sublimation of the ice formed by high vacuum). Finally, between 3 and 6 grams of graphene oxide are obtained.

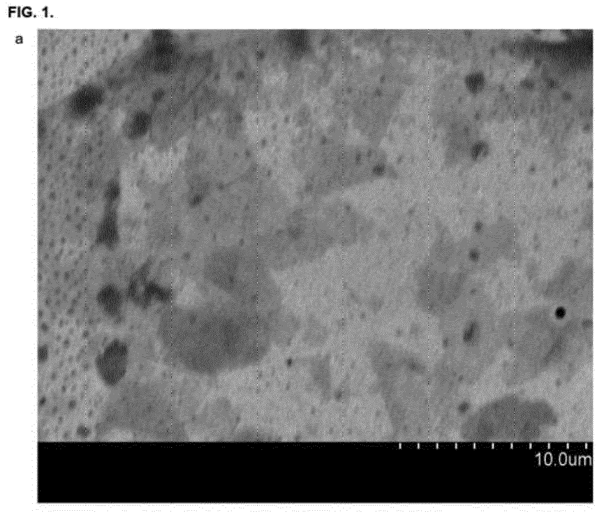

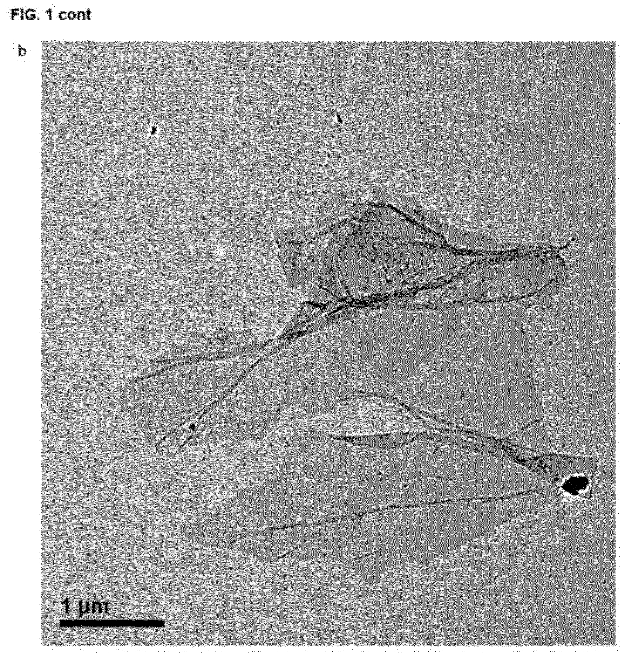

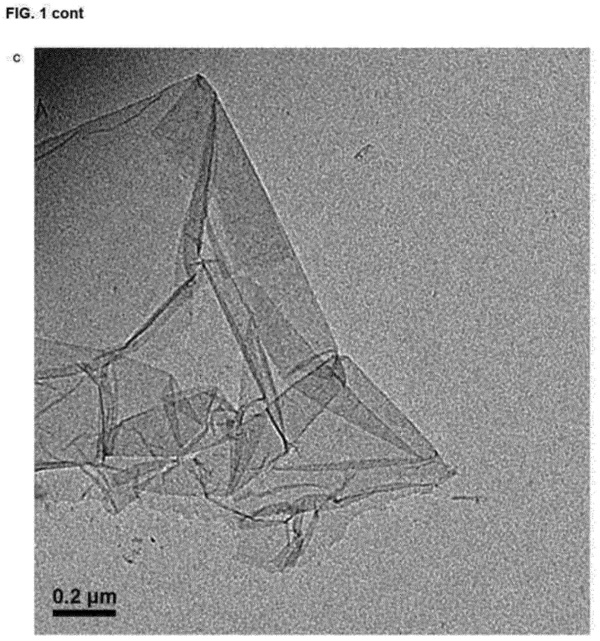

Figure 1 shows different images of the synthesised graphene oxide obtained by scanning electron microscopy and by transmission electron microscopy.

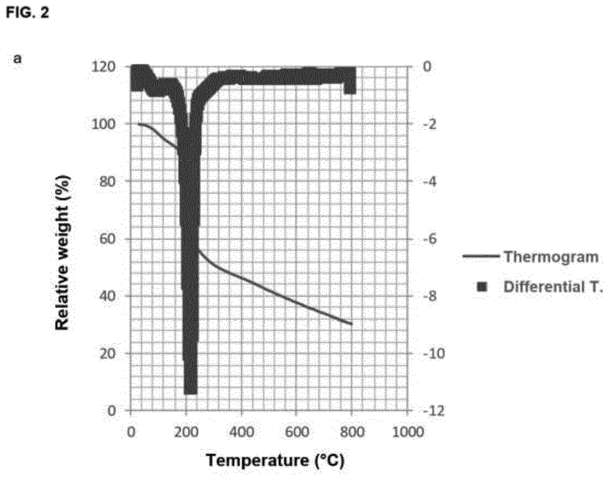

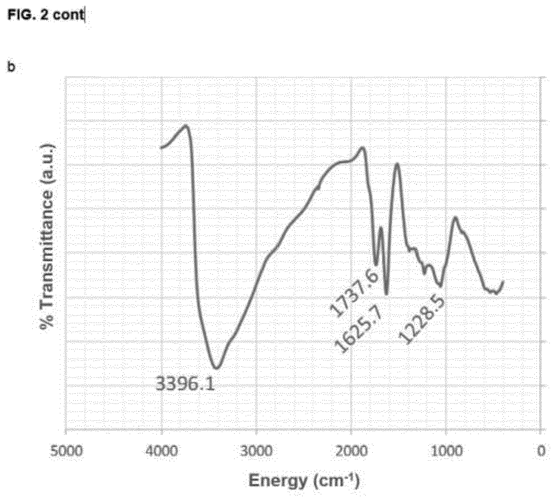

Figure 2(a) shows the thermal degradation profile of graphene oxide, showing a first loss (about 100 °C) corresponding to humidity and a small proportion in the sample (7% by weight). Subsequently, it undergoes significant weight loss centred at 200 °C, which would correspond to the thermolabile oxygenated groups that it has on the surface (around 35-40% by weight). The infrared spectrum thereof is shown in Figure 2(b). By means of this technique, the chemical nature of the functional groups of graphene oxide is identified. A large presence of -OH groups (in the band at 3396 cm$^{-1}$), linear and cyclic esters (in corresponding bands at 1737.6 cm$^{-1}$ and 1625.7 cm$^{-1}$ respectively), and also a high presence of epoxide groups (in the band at 1228.5 cm$^{-1}$) are observed.

**Obtaining graphene oxide colloidal dispersion**

Powdered graphene oxide was introduced into an Erlenmeyer flask and deionised water was added to it to obtain a final concentration of 0.5 mg/ml. It was gently stirred in circles, alternating it with short ultrasonic pulses, of no more than 10 seconds, in an ultrasonic bath (45 kHz). The process was suspended once complete homogeneity and the absence of large solid particles suspended or deposited on the bottom were observed. Under these conditions, graphene oxide can perfectly remain in suspension for up to 8 hours before starting to precipitate to the bottom of the container containing it [León, V., González-Domínguez, J. M., Fierro, J. L. G., Prato, M., Vázquez, E. Production and stability of mechanochemically exfoliated graphene in water and culture media. Nanoscale, 8, 14548-14555 (2016)]. To recover the dispersion, manual stirring combined with ultrasonic pulses can easily be applied.

**Cathedral stone application**

A diagram 1 of the tests carried out during the first phase to determine the effectiveness and behaviour of graphene oxide as a protector is shown below.

Diagram 1 of samples analysed to determine the effectiveness and behaviour of graphene oxide as a protector.

| SAMPLE | CLASSIFICATION | TREATMENTS USED ON SAMPLES | TEST CONDITIONS | TECHNIQUE |
|---|---|---|---|---|
| FIRST TESTING PHASE<br><br>Dolomites and Limestone extracted from the same stone quarry from the Cathedral of León | 18 large samples (Irregular, approximately 20*10*30 cm³) | 9 with graphene oxide (4 passes 0.5 mg/ml) | 3 rain (NG)<br>3 temperature changes (RG)<br>3 rain and temperature changes (AG) | Tests with Photogrammetry |
| | | 9 uncoated | 3 rain (N)<br>3 temperature changes (R)<br>3 rain and temperature changes (A) | Resistance tests |
| | 15 medium samples (M) (Irregular, and 12*6*20 cm³) | 6 with graphene oxide (4 passes 0.5 mg/ml) | 2 rain (MNG)<br>2 temperature changes (MRG)<br>2 rain and temperature changes (MAG) | Observation with microscope at 1x, 5x and 10x<br><br>Colour by means of colourimetry |
| | | 9 uncoated | | |
| | 12 small samples (m) (Irregular 2*3*0.5 cm³) | All with graphene oxide (mG) (4 passes 0.5 mg/ml) | | Raman spectroscopy<br>X-ray diffraction (XRD)<br>X-ray photoelectron spectroscopy (XPS) |

As can be seen in said diagram, a total of 45 irregular-shaped samples were obtained from the same cathedral stone (dolomite), classified according to size into 18 large samples, 15 medium samples and 12 small samples with sides less than 2-3 cm. The samples of these three size groups were in turn subdivided into 2 similar subgroups, where lots would be drawn to decide which subgroup would be the control and which would be experimental. Half of these samples were treated with the graphene oxide (GO) product at a concentration of 0.5 mg/ml obtained as described above by means of an airbrush, applying 4 layers on one of the groups into which each size group was divided. This half of the collected samples formed the experimental group, leaving the rest of the samples without any coating as control samples.

The 18 large samples were photographed in detail in order to apply photogrammetric techniques and evaluate the wear found among the experimental and control samples. The photogrammetry used was Structure from Motion (SfM), which enables an exact 3D model of each sampled rock to be reconstructed from images. Therefore, this methodology requires taking photographs of all areas of the object's surface with overlapping areas (matches). These photographs must be taken from, at least, two different positions. From then on, common elements of each of the photographs will be identified which, together with information about the position and orientation of the camera, will enable the 3D coordinates to be determined from the 2D coordinates [James, M. R., & Robson, S. (2014). Mitigating systematic error in topographic models derived from UAV and ground based image networks. Earth Surface Processes and Landforms, 39(10), 1413-1420]. 3D models are subsequently obtained from a point cloud thanks to software such as Agisoft Photoscan based on SfM (Structure from Motion) technology. Therefore, models prior to exposure to physical agents and models of the rocks which have already undergone the effect of said agents can be subsequently removed, in order to detect wear that has occurred or protection in the case of samples with graphene oxide.

After creating the models of all the large samples, they were divided into 3 batches, each batch consisting of an equal number of experimental and control samples. Said batches were subjected to the simulation of the main harsh climatic conditions: a batch with heavy rain (N), another with extreme temperature changes from -18 °C to 35 °C (R) and the final batch with synergy of both processes, in other words, with heavy rain and extreme temperature changes (A). Afterwards, the photogrammetric studies were carried out again to evaluate their losses. We found similar results in all the analysed samples, although the difference was greater when it came to samples that had been exposed to rain.

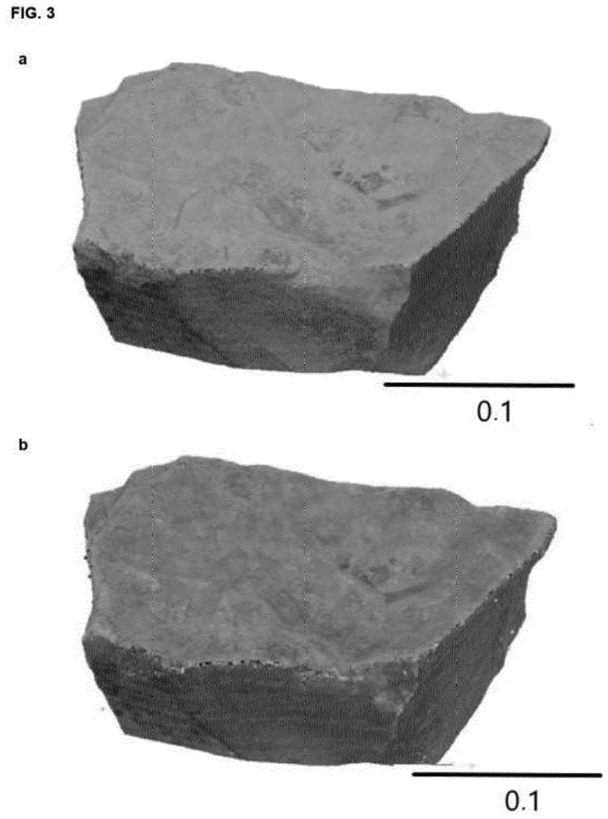

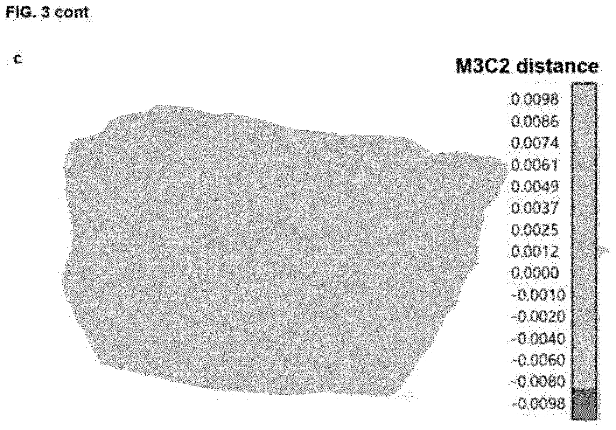

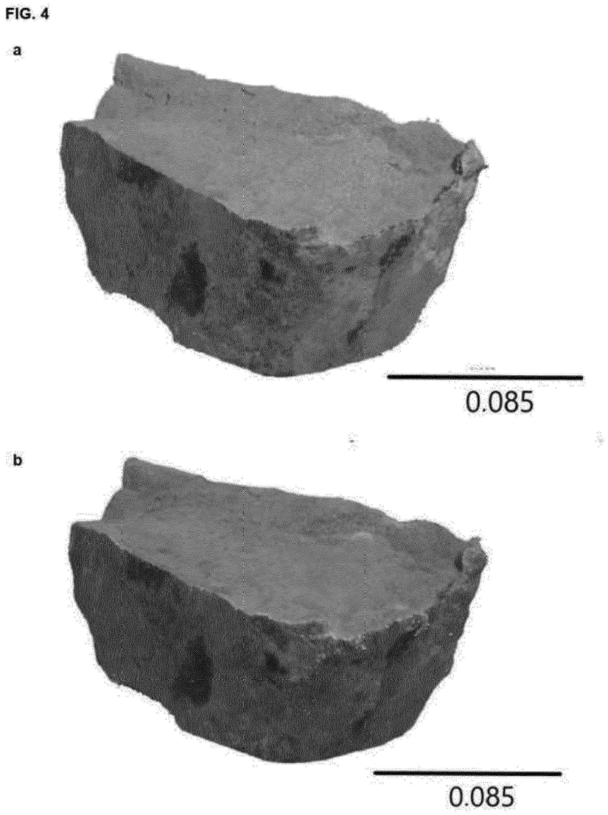

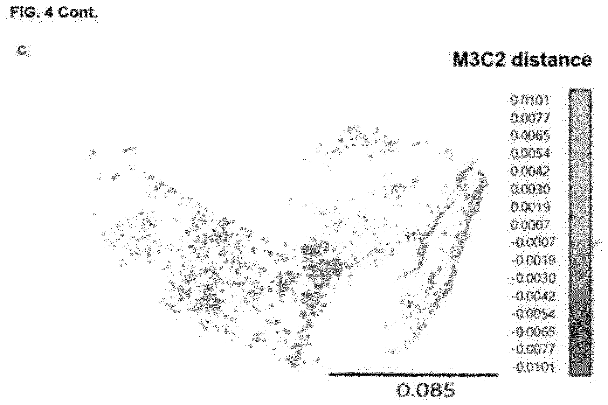

FIG. 3 and 4 show the photogrammetric analysis of the sample protected with graphene oxide AG10 (Fig. 3) and the unprotected sample A10 (Fig. 4). It is observed that, after having been subjected to processes of rain and temperature changes, the protected rock AG10 has no noticeable surface wear that is significant enough to be recorded (Fig. 3), whereas the unprotected rock A10 has quite noticeable erosion (Fig. 4).

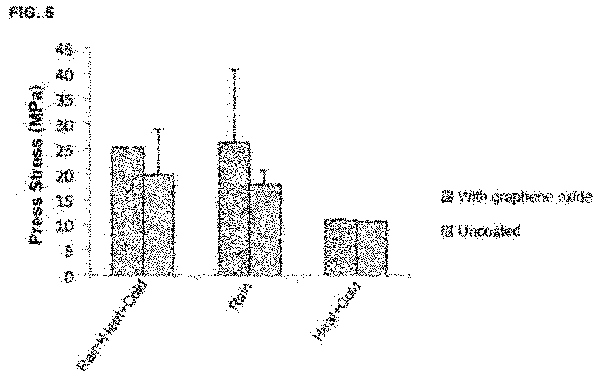

Subsequently, these large samples were subjected to pressure in a hydraulic press and with a Smith hammer in order to evaluate the resistance offered by the treated stones. It was preliminarily found that the samples protected with graphene oxide (AG, RG and NG) offered greater resistance than the unprotected ones (A, R and N) regardless of the treatment undergone, although the difference was greater in the samples subjected to rain (AG, NG, A and N) (Fig. 5).

The samples from the batch of medium stones (15) were divided as follows: 6 with 4 layers of graphene oxide (MNG, MRG and MAG) and 9 as control samples (MN, MR and MA). Such that each erosion group (N, R and A) had two graphene-coated stones (2 MNG, 2 MRG and 2 MAG) and three without coating (3 MN, 3 MR and 3 MA). The changes in these samples were observed by viewing through a magnifying glass. These samples were also used to determine the stability of graphene oxide in the stone after undergoing the entire process involved in cycles of extreme weather conditions.

When examining the medium-sized samples (M) through the magnifying glass, it was observed that the smaller granules are dragged, preferably in samples without graphene oxide, and smoothing of the surface occurs together with an increase in the porosity of unprotected samples, probably due to limestone dissolution processes.

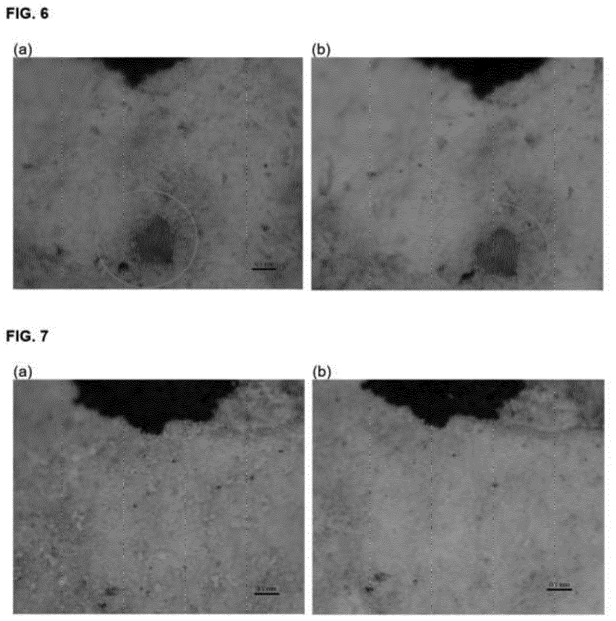

The photographs shown in Figure 6 correspond to the MA3 sample, without graphene, before and after undergoing the mixed treatment (A). It can be observed how the profiles of the orange cavity have been eroded, as well as the surface that surrounds it. The images are taken with 10x magnification. This type of surface wear develops constantly over time and ends up deforming limestone rock like that of sculptures which are exposed to the open air, rain and temperature changes.

Figure 7 shows the photographs taken with a magnifying glass of 10x magnification of the MN1 sample before and after being subjected to, for example, a test with more rain and temperature changes. In the photographs with 10x magnification, it is easy to see how the surface tends to homogenise. The area after experimentation is smoother and has fewer irregularities than before (Fig. 7).

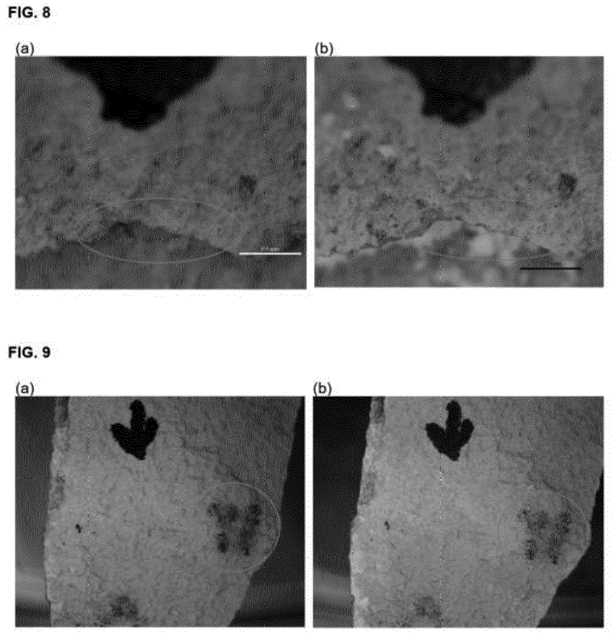

However, in the samples protected with graphene oxide (MG), it is seen how it practically maintains the same profile (Fig. 8) contrary to what happened with the stones without graphene where this profile had been rounded. The photogrammetry tests indicated a substantial improvement in general, whereas with these stones, the improvement also occurs in the smallest profiles.

The following images correspond to MNG1. Before the rain tests, the limestone had marked black spots due to colonisation of an undetermined lichen. After experimentation, the spots decreased in intensity and presence (Fig. 9).

The comparison of the treated and untreated rock samples that underwent rain simulation (MN) shows how the uncoated samples have been completely colonised by moss and lichens, whereas the antimicrobial power of graphene oxide has prevented colonisation of the protected rocks (MNG). Some small spots were observed very locally and in a small amount, and, when observed through a microscope, they were characterised as moss and dead lichens by the expert Professor of Botany Doctor Arsenio Terrón (University of Leon). The exploration of lichen on the surface reveals the presence of mainly *Verrucaria sp* thalli on the surface of uncoated samples (MN). This lichen secretes substances that deteriorate the surface of the stone over time. On some samples, we even found sexual reproduction structures, which means that the lichen is alive and proliferating. However, on the samples protected with graphene oxide (MNG), we found traces of lichen *Lecidea sp* and *Verrucaria sp* present in scattered and barely active thalli. It should be noted that these lichens were already present on the rock before the coating was applied and have not grown a posteriori. They even seem to retract slightly, such that we see how the treatment is effective.

The tests carried out on the large and medium samples confirmed the usefulness of protection on the studied samples, and therefore a suggestion was made to study which minimum concentration makes it possible for the stone to have a protective effect and its durability over time. The optimal concentration was studied in the subsequent testing phase. To check the durability over time and the resistance of graphene oxide on the samples after being subjected to rain and temperature changes, small samples (mG) were used. It was extremely difficult to find a technique sensitive enough to be able to observe the state of stability of the graphene oxide layer on these samples (mNG). Measuring with Raman spectroscopy was ruled out due to the high fluorescence of limestone, and the X-Ray Diffraction technique was also ruled out because it was not very sensitive. The technique finally chosen for this purpose was X-Ray Photoelectron Spectroscopy (XPS) which allows us to know the chemical state and the surface electronic structure of the samples. This XPS analysis suggested that the protective layer of graphene oxide remain constant on the treated stones despite the aggression of the rain and temperature changes they were subjected to.

A selection of 6 small samples (m) were analysed. With this technique, in one table we were able to include the binding energies of the most abundant elements in each sample, and in another table, we gathered the atomic ratios of the elements in the surface region (approximately 3-4 nm deep). Dolomite was confirmed to be a double carbonate of Mg and Ca but it contains aluminosilicate impurities (Table 1 and 2).

In order to see whether graphene oxide was used to coat the surface of the dolomite grains, the C1s orbital level of fresh dolomite (mN, mR and mA) and dolomite with GO (mNG, mRG and mAG) were recorded, taking the C1s of graphene oxide as a reference.

Table 1. Binding energies (eV) of internal levels of dolomite and graphene oxide samples

| Sample | C1s | O1s | Ca2p$_{3/2}$ | Mg2p | Al2p | Si2p |
|---|---|---|---|---|---|---|
| Fresh dolom (mN, mR and mA) | 284.8 289.4 (14) | 531.8 | 347.3 | 50.2 | 74.5 | 102.8 |
| Dolom + Graphene oxide (mNG, mRG and mAG) | 284.8 286.2 289.4 (4) | 531.8 | 347.4 | 50.3 | 75.5 | 102.8 |
| Graphene oxide | 284.8 286.2 | 531.8 | | | | |

The percentage of the C1s peak of the carbonate species is in parentheses. Dolomite contains, in addition to Mg and Ca carbonate, aluminosilicate.

Table 2. Atomic composition (% atoms) of dolomite samples

| Sample | C$_{car}$/Ca (%at) | Mg/Ca (%at) | Al/Ca (%at) | Si/Ca (%at) |
|---|---|---|---|---|
| Dolomite (mN, mR and mA) | 1.311 | 0.728 | 0.852 | 1.985 |
| Graphene oxide-coated dolomite (mNG, mRG and mAG) | 1.356 | 0.019 | 0.950 | 1.745 |

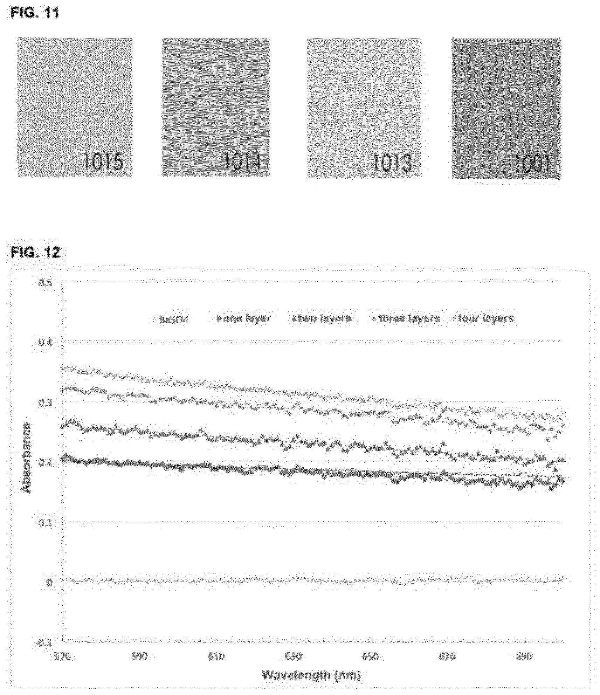

Figure 12 shows the XPS spectra of the C1s orbitals in three representative samples. It is observed how the carbonate signal (shaded) significantly decreases in the graphene oxide-coated samples (mNG, mRG and mAG); therefore, this technique can constitute a routine test for verifying the presence of graphene oxide on the surface of the samples.

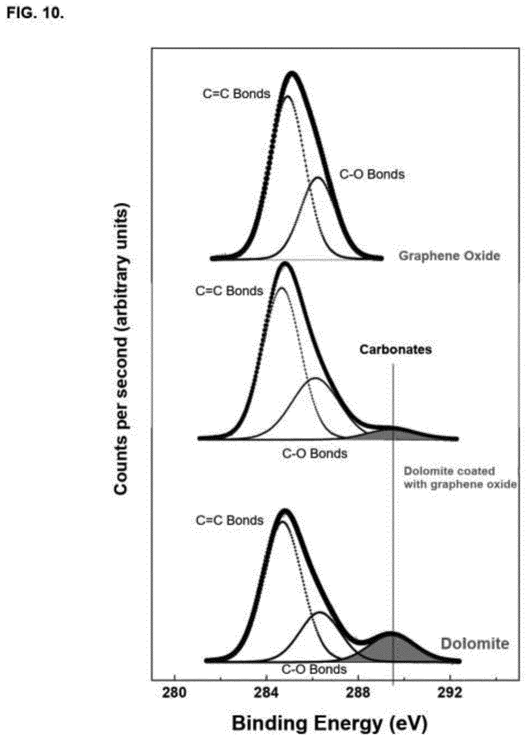

In addition to recording the C1s orbitals of the three samples, their comparison to the XPS spectra was also carried out (See Table 1). It is clearly seen that the carbonate signal (shaded) sharply decreases in graphene oxide-coated dolomite (mNG, mRG and mAG) (Figure 10). This indicates that graphene oxide has coated the surface of the dolomite grains. The atomic ratios of the elements under the graphene oxide are roughly the same as fresh dolomite (mN, mR and mA), which also supports the fact that graphene oxide is coating the dolomite substrate.

Diagram 2 of the samples analysed during the second phase of determining the minimum and maximum number of graphene oxide layers recommended for use on the rock, which effectively protects but is also within the tolerable limits in terms of modifying aesthetics and colour, is provided below.

| SAMPLE | CLASSIFICATION | TREATMENTS USED ON SAMPLES | TEST CONDITIONS | TECHNIQUE |
|---|---|---|---|---|
| **SECOND TESTING PHASE**<br><br>Dolomites and Limestone extracted from the same stone quarry from the Cathedral of León | **18 prismatic samples** (Regular, approximately $8 \times 5 \times 5$ cm$^3$) (each layer 0.0033 mg/cm$^2$) | 3 without graphene oxide (X)<br>3 with 1 layer of graphene oxide (GX)<br>4 with 2 layers of graphene oxide (GXX)<br>4 with 3 layers of graphene oxide (GXXX)<br>4 with 4 layers of graphene oxide (GXXXX) | rain and temperature changes | 1 Tests with Photogrammetry<br><br>2 Observation of colour change by means of commercial colourimetry<br><br>3 Resistance tests-press |
| | **19 small samples (m)** (Irregular 2*2*4 cm$^3$) | 7 without graphene oxide (mX)<br>3 with 1 layer of graphene oxide (mGX)<br>3 with 2 layers of graphene oxide (mGXX)<br>3 with 3 layers of graphene oxide (mGXXX)<br>3 with 4 layers of graphene oxide (mGXXXX) | 16 rain and temperature changes<br>• 1 of 2 layers<br>• 1 of 3 layers<br>• 1 without GO<br><br>3 Without rain or heat<br>• 1 of 2 layers<br>• 1 of 3 layers<br>• 1 without GO | Diffuse reluctance<br><br>X-ray photoelectron spectroscopy (XPS) |

19 fragments or small samples (with dimensions less than 2 cm per side) called (mX, mGX, mGXX, mGXXX and mGXXXX) were collected. Thanks to their size, these small samples are ideal for the physico-chemical analysis thereof, as in the case of XPS (X-ray photoelectron spectroscopy) or the analysis of the absorbance thereof. In addition, experiments have been conducted with 18 other prismatic samples measuring $8 \times 55$ cm$^3$, creating batches of rocks, three with 0 layers (mX), three with 1 layer (GX), four with 2 layers (GXX), four with 3 layers (GXXX) and four with 4 layers of graphene oxide (GXXXX).

In all cases there would be a negligible variation in colour (measured with a commercial paint colourimeter). The samples already naturally have a small colour variation, the range of variation of which is between the hues in Figure 11. Most of the samples had the hue considered as 1015 according to the range of shades covered by the samples. RAL Classic code measured with a Nix Mini Procolor finder mini colourimeter, manufactured by Nix Sensor Ltd. series no. D5085200. After application of the graphene oxide and the erosion tests to which they were subjected, it can be clearly seen that the samples maintain their initial colour; the stones with 1 layer (GX) and 2 layers (GXX) have no obvious changes to the naked eye, maintaining the initial colour of 1015 or 1014. However, the samples that have 3 layers (GXXX) and 4 layers (GXXXX) have been slightly darkened, although it is hardly noticeable, going from having a shade of 1015 or 1013 to 1014. These 4 hues are included because they correspond to the range of natural colours found in the samples, such that it can be observed that the same natural stone already has more important changes than what the graphene coating of the maximum number of applied layers (4) entails.

It was found that just 2 layers are enough to provide acceptable protection, increasing protection up to the application of 4 layers. Each of the layers that are applied has a concentration of 0.0033mg/cm$^2$, a concentration of the initial colloidal dispersion of 0.5 mg/ml being considered.

Lastly, the degree of opacity has been evaluated by means of diffuse reflectance techniques in the visible spectrum in discontinuous mode, taken with the Diffuse Reflectance Device coupled to a UV-Vis spectrophotometer, and it has been observed that there are hardly any differences among the white samples, in other words, samples without graphene oxide (Fig 12).

In order to be able to make an estimate of the relative darkening observed in the samples treated with graphene oxide (GO), a rate has been applied according to the following equation:

$$darkening\ rate = \frac{Absorbance\ sample\ without\ GO - Absorbance\ sample\ coated\ with\ n\ layers\ of\ GO}{Absorbance\ sample\ without\ GO}$$

By applying this equation, it has been found that treating the samples with up to 4 layers of graphene oxide hardly causes darkening when said layer has a concentration of 0.0033 mg/cm$^2$ (for an initial colloidal dispersion of 0.5 mg/ml). Considering the light colour of the graphene stone, the treatment consisted of barely increasing the absorbance values thereof, and it would be observable with only 3 and 4 layers, although without taking on notable darkening; in no case is the stone darkened, not even twice as much as a colour that is already very light. To compare the spectra, points on the visible spectrum of colours similar to the shade of the rocks have been chosen, between yellow and orange (600 nm, 610 nm and 620 nm) (See Table 3).

Table 3. Average measurements of the absorbance slopes. The absorbance values at 600 nm, 610 nm and 620 nm and relative darkening with respect to the colour of the untreated sample are also shown.

| Sample | 600 nm | | 610 nm | | 620 nm | |
|---|---|---|---|---|---|---|
| | Abs | Dark | Abs | Dark | Abs | Dark |
| uncoated (X) | 0.1920 | 0.0000 | 0.1908 | 0.0000 | 0.1884 | 0.0000 |
| one layer (GX) | 0.1920 | 0.0000 | 0.1863 | -0.0234 | 0.1873 | -0.0057 |
| two layers (GXX) | 0.2437 | 0.2691 | 0.2367 | 0.2404 | 0.2297 | 0.2190 |
| three layers (GXXX) | 0.3017 | 0.5712 | 0.2927 | 0.5339 | 0.2870 | 0.5234 |
| four layers (GXXXX) | 0.3323 | 0.7309 | 0.3220 | 0.6876 | 0.3207 | 0.7021 |

**Claims**

1.   A method for protecting an ornamental object or surface of rocky origin, exposed to the elements, **characterised in that** it comprises the following steps:

   a) synthesising graphene oxide chemically in an acid medium
   b) dispersing the graphene oxide paste obtained in step (a) in water,
   c) neutralising the graphene oxide dispersion obtained in step (b) to a pH of between 4.5 and 5.5 by dialysis in water
   d) eliminating the water contained in the graphene oxide obtained in step (c),
   e) preparing a graphene oxide colloidal dispersion in a concentration comprised between 0.1 and 1 mg/ml from the graphene oxide obtained in step (d) and water, and
   f) spraying the dispersion obtained in step (e) exclusively on an ornamental object or surface of rocky origin, keeping the percentage of darkening at values less than 1.

2.   The method according to claim 1, wherein the ornamental object or surface of rocky origin is of interest for historical and cultural heritage.

3.   The method according to any of claims 1 or 2, wherein the dialysis of step (c) is carried out with cellulose membranes with a molecular weight cut-off between 6 kDa and 8 kDa.

4.   The method according to claim 3, wherein the dialysis of step (c) is carried out with regenerated cellulose membranes.

5.   The method according to any of claims 1 to 4, wherein step (d) is carried out by evaporation or lyophilisation.

6.   The method according to any of claims 1 to 5, wherein the graphene oxide colloidal dispersion of step (e) is prepared in a concentration comprised between 0.1 and 1 mg/ml.

7.   The method according to any of claims 1 to 6, wherein the percentage of darkening of step (f) must be kept at values between 0 and 0.7.

FIG. 1.

a

10.0um

FIG. 1 cont

1 µm

FIG. 1 cont

c

0.2 µm

FIG. 2

FIG. 2 cont

b

FIG. 3

a

0.1

b

0.1

FIG. 3 cont

c

M3C2 distance

| |
|---|
| 0.0098 |
| 0.0086 |
| 0.0074 |
| 0.0061 |
| 0.0049 |
| 0.0037 |
| 0.0025 |
| 0.0012 |
| 0.0000 |
| -0.0010 |
| -0.0020 |
| -0.0040 |
| -0.0060 |
| -0.0080 |
| -0.0098 |

FIG. 4

a

0.085

b

0.085

**FIG. 4 Cont.**

c

M3C2 distance

0.085

FIG. 5

FIG. 6

(a)

(b)

FIG. 7

(a)

(b)

FIG. 8

FIG. 9

FIG. 10.

FIG. 11

FIG. 12

# INTERNATIONAL SEARCH REPORT

| International application No. |
|---|
| PCT/ES2020/070177 |

**A. CLASSIFICATION OF SUBJECT MATTER**

*C08K3/04* (2006.01)

According to International Patent Classification (IPC) or to both national classification and IPC

**B. FIELDS SEARCHED**

Minimum documentation searched (classification system followed by classification symbols)

C08K

Documentation searched other than minimum documentation to the extent that such documents are included in the fields searched

Electronic data base consulted during the international search (name of data base and, where practicable, search terms used)

EPODOC, INVENES, WPI, PATENW, XPESP, CAPLUS

**C. DOCUMENTS CONSIDERED TO BE RELEVANT**

| Category* | Citation of document, with indication, where appropriate, of the relevant passages | Relevant to claim No. |
|---|---|---|
| X | T.ARUN et al.. Surface Protection Coating Material for Controlling The Decay of Major Construction Stone. Aip Conference Proceedings, 23/05/2017, Vol. 1832, N° 1, pages 1 to 3 page 1, columns 1 - 2 | 1-7 |
| A | ROSILLO-LOPEZ et al.. A simple and mild chemical oxidation route to high purity nano-graphene oxide. Carbon, 08/05/2016, Vol. 106, N° 56 a 63 page 57, paragraph 3 | 1-7 |
| A | CN 107324365 A (UNIV NORTHWESTERN POLYTECHNICAL)) 07/11/2017, (abstract) [on line] Abstract of the DataBase WPI. Retrieved from EPOQUE | 1-7 |

☒ Further documents are listed in the continuation of Box C.         ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| 02/05/2020 | **(11/05/2020)** |
| Name and mailing address of the ISA/ OFICINA ESPAÑOLA DE PATENTES Y MARCAS Paseo de la Castellana, 75 - 28071 Madrid (España) Facsimile No.: 91 349 53 04 | Authorized officer A. Rua Aguete Telephone No. 91 3498518 |

Form PCT/ISA/210 (second sheet) (January 2015)

## INTERNATIONAL SEARCH REPORT

International application No.

PCT/ES2020/070177

C (continuation).                    DOCUMENTS CONSIDERED TO BE RELEVANT

| Category * | Citation of documents, with indication, where appropriate, of the relevant passages | Relevant to claim No. |
|---|---|---|
| A | JI CHEN. An improved Hummers method for eco-friendly synthesis of graphene oxide. Carbon, 27/07/2013, Vol. 64, pages 225 to 229, page 226, paragraphs [3 - 7] | 1-7 |
| A | REYES-ESTEBANEZ et al.. Antimicrobial engineered nanoparticles in the built cultura heritage context and their ecotoxicological impact on animals and plants: a brief review.. Herit Sci, 2018, Vol. 6, pages 1 to 11. page 4, paragraph 4 page 4, paragraph 4 | 1-7 |
| A | FOLKE JOHANNES TÖLLE et al. Scale-up and purification of graphite oxide as intermediate for functionalized graphene.. Carbon, 13/04/2014, Vol. 75, pages 432 to 442. (abstract) (abstract) | 1-7 |

Form PCT/ISA/210 (continuation of second sheet) (January 2015)

INTERNATIONAL SEARCH REPORT

Information on patent family members

International application No.

PCT/ES2020/070177

| Patent document cited in the search report | Publication date | Patent family member(s) | Publication date |
|---|---|---|---|
| CN107324365 A | 07.11.2017 | CN107324365B B | 08.01.2019 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 106317976 A
- CN 106866074 A

### Non-patent literature cited in the description

- **MOROPOULOU A ; KOULOUMBI N ; HARALAMPOPOULOS G ; KONSTANTI A ; MICHAILIDIS P.** Criteria and methodology for the evaluation of conservation interventions on treated porous stone susceptible to salt decay. *Prog. Org. Coat.,* 2003, vol. 48, 259-270
- **LA RUSSA MF ; BARONE G ; BELFIORE GM ; MAZZOLENI P ; PEZZINO A.** Application of protective products to 'Noto' calcarenite (south-eastern Sicily): a case study for the conservation of stone materials. *Environ. Earth Sci.,* 2011, vol. 62, 1263-1272
- **ALESSANDRINI G ; AGLIETTO M ; CASTELVETRO V ; CIARDELLI F ; TONIOLO L.** Comparative evaluation of fluorinated and unfluorinated acrylic copolymers as waterrepellent coating materials for stone. *J. Appl. Polym. Sci.,* 2000, vol. 76, 962-977
- **ALEMANY E ; ARANGUREN L.** Criterios de Intervención en Materiales Pétreos (Intervention Criteria in Masonry Materials). *Bienes Cult. Inst. Patrim. Histórico Esp.,* 2003, vol. 2, 20
- **NINE M. J. ; COLE M. A. ; TRAN D. N. H. ; LOSIC D.** Graphene: a multipurpose material for protective coatings. *J. Mater. Chem. A,* 2015, vol. 3, 12580-12602
- **KRISHNAMURTHY A. ; GADHAMSHETTY V. ; MUKHERJEE R. ; NATARAJAN B. ; EKSIK O. ; SHOJAEE S. A. ; LUCCA D. A. ; REN W. ; CHENG H. M. ; KORATKAR N.** *Superiority of Graphene over Polymer Coatings for Prevention of Microbially Induced Corrosion. Sci. Rep.,* 2015, vol. 5, 1358
- **TANG J ; YAO W ; LI W ; XU J ; JIN L ; JZHANG J ; XU Z.** Study on a novel composite coating based on PDMS doped with modified graphene oxide. *J. Coat. Technol. Res.,* 2018, vol. 15, 375-383
- **HUMMERS, W. S. ; OFFEMAN, R. E.** Preparation of graphitic oxide. *J. Am. Chem. Soc.,* 1958, vol. 80 (13), 1339
- **TOUR ; MARCANO, D. C. ; KOSYNKIN, D. V. ; BERLIN, J. M. ; SINITSKII, A. ; SUN, Z. ; SLESAREV, A. ; ALEMANY, L. B. ; LU, W. ; TOUR, J. M. et al.** Improved Synthesis of Graphene Oxide. *ACS Nano,* 2010, vol. 4, 4806-4814
- **TOUR, J. M.** Improved Synthesis of Graphene Oxide. *ACS Nano,* 2010, vol. 4, 4806-4814
- **LEÓN, V. ; GONZÁLEZ-DOMÍNGUEZ, J. M. ; FIERRO, J. L. G. ; PRATO, M. ; VÁZQUEZ, E.** Production and stability of mechanochemically exfoliated graphene in water and culture media. *Nanoscale,* 2016, vol. 8, 14548-14555
- **JAMES, M. R. ; ROBSON, S.** Mitigating systematic error in topographic models derived from UAV and ground based image networks. *Earth Surface Processes and Landforms,* 2014, vol. 39 (10), 1413-1420